# EUROPÄISCHE PATENTSCHRIFT

(11) **EP 0 849 863 B1**
(45) Veröffentlichungstag und Bekanntmachung des Hinweises auf die Patenterteilung: **03.04.2002**
(21) Anmeldenummer: 97121341.8
(22) Anmeldetag: 04.12.1997
(51) Int. Cl.: H02K 5/16, H02K 5/04

(54) **Elektromotor, insbesondere mit integrierter Dreherkennung**
Electric motor, in particular with integrated rotation detection
Moteur électrique, en particulier avec détection de rotation

(30) Priorität: 19.12.1996 DE 19653207
(43) Veröffentlichungstag der Anmeldung: 24.06.1998
(73) Patentinhaber: SIEMENS AKTIENGESELLSCHAFT, 80333 München (DE)
(72) Erfinder: Bellman, Jürgen, 97956 Werbach-Brunntal (DE); Seuffert, Werner, 97493 Bergrheinfeld (DE); Hartel, Gerd Dipl. Ing,, 97276 Margetshöchheim (DE)

(56) Entgegenhaltungen:
- EP-A- 0 359 853
- EP-A- 0 547 935
- DE-A- 4 440 479
- DE-B- 1 180 041
- FR-A- 2 266 357
- GB-A- 2 156 599
- US-A- 4 049 984
- PATENT ABSTRACTS OF JAPAN vol. 095, no. 008, 29.September 1995 & JP 07 123625 A (MATSUSHITA ELECTRIC IND CO LTD), 12.Mai 1995,

## Beschreibung

Die Erfindung bezieht sich auf einen Elektromotor insbesondere zum Einsatz in elektrischen Kupplungs-Stellantrieben bzw. automatischen Brems-Stellantrieben in Kraftfahrzeugen.

Motoren der vorgenannten Art müssen in ihrer Baugröße, insbesondere axial, kompakt sowie feuchtigkeitsdicht geschlossenen und dabei als Massen-Serienprodukt fertigungs- bzw. montagetechnisch einfach aufgebaut sein; um den Stellantrieb in Abhängigkeit von kleinsten Bewegungsänderungen ansteuern zu können, wird außerdem eine Dreherkennung mit hoher Auflösung gefordert, die bei nur geringem meßtechnischen Schaltungsaufwand vorteilhaft durch ein vielpolig magnetisiertes Polrad als Drehimpuls-Geber erreichbar ist, jedoch technologisch einen relativ großen Durchmesser zur Aufbringung der Vielzahl von notwendigen Magnetpolen auf der Umfangsfläche voraussetzt. Da das Polrad auf der Rotorwelle, jedoch der zugeordnete Drehimpuls-Empfänger im Stator positioniert sind und zur sicheren Signalerkennung ein konstant geringer Luftspalt zwischen Drehimpuls-Geber und Drehimpuls-Empfänger zu gewährleisten ist, müssen das eine Rotorlagerung aufnehmende Lagerschild einerseits und das Motorgehäuse andererseits trotz Fertigung als Massen-Serien-Produkt mit engen Toleranzen zueinander positionierbar sein.

Durch die JP 07 123 625 A ist die mechanische Verbindung zweier topfförmiger Motorgehäusehälften im Bereich axial voreinander liegender Flanschteile an ihren offenen Stirnseiten mittels in den einen Flanschteil eingedrückter, axial in korrespondierende Aufnahmen des anderen Flanschteils steckbarer Ausrichtmittel und Befestigungsmitteln in Form von in den einen Flanschteil tiefgezogenen und nach Einstecken in Öffnungen des anderen Flanschteils umbördelten Hohlniete bekannt; die Ausrichtmittel einerseits bzw. die Befestigungsmittel andererseits sind bei jeweils gleichem radialen Abstand zur Motorachse tangential über den Umfang der Flanschteile gegeneinander versetzt.

Gemäß Aufgabe der vorliegenden Erfindung soll ein mit fertigungs- bzw. montagetechnisch geringerem Aufwand herstellbarer, feuchtigkeitsdicht geschlossener Kommutator-Stellmotor mit im Motorgehäuse integrierter hochauflösender Dreherkennung geschaffen werden.

Die Lösung der vorgenannten Aufgabe gelingt erfindungsgemäß durch einen Elektromotor gemäß Patentanspruch 1; vorteilhafte Ausgestaltungen der Erfindung sind jeweils Gegenstand der Unteransprüche.

In einer vorteilhaften Ausgestaltung der Erfindung lassen sich durch die Anordnung der Dreherkennung innerhalb der Lagerstellen des Elektromotors und innerhalb dessen Motorgehäuses mit gleichtzeitiger Integrierung des Drehimpuls-Empfängers auf der an sich bei einem Kommutatormotor vorhandenen Bürstenhalterung der für die Dreherkennung notwendige Fertigungs-Montageaufwand wesentlich mindern und die axiale Baugröße des Antriebes weiter verringern; gleichzeitig ist durch die Einbeziehung der Dreherkennung in das Innere des Motorgehäuses ein zusätzlicher Schutz des Antriebes vor äußeren Beschädigungen bei Anlieferung und kundenseitiger Montage des Antriebes gewährleistet.

Eine im Sinne geringer Luftspalt-Toleranzen zwischen Drehimpuls-Geber und Drehimpuls-Empfänger vorteilhafte spielfreie Fixierung eines Rotorwellen-Lagers in einer Lageraufnahme kann mit nur in einer, d.h. axialen, Bewegungsrichtung bewegbaren Bearbeitungsschritten durch Einsetzen des Lagers in die Lageraufnahme und durch anschließendes Ausstemmen von axialen, insbesondere gegen den Außenring eines Kugellagers zur Anlage kommmenden, Anschlägen aus der Lageraufnahme erreicht werden. Zweckmäßigerweise wird das Wälzlager in eine topfförmige Lageraufnahme derart eingefügt, daß das Wälzlager in Einsteckrichtung vorn gegen den Topfboden einer unter anderem die radiale Positionierung gewährleisteten topfförmigen Aufnahme anliegt und in Gegeneinsteckrichtung durch aus dem Topfrand ausgeformte, insbesondere ausgestemmte, axiale Anschläge spielfrei fixiert ist. Das andere Wellenende der Rotorwelle des Elektromotors wird zweckmäßigerweise in einem Loslager, insbesondere einem Gleitlager, gelagert.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem axialen Längsschnitt einen Kommutator-Stellmotor für einen elektrischen Kupplungs-Stellantrieb in einem Kraftfahrzeug;
- FIG 2: die axiale kommutatorseitige Stirnansicht des mit der Bürstenhalterung versehenen Motorgehäuses bei abgenommenem kommutatorseitigen Lagerschild;
- FIG 3: die Anordnung gemäß FIG 1 in einer Vormontagestellung vor dem Aufdrücken des Polrades auf die Rotorwelle und vor der Montage des kommutatorseitigen Lagerschildes mit darin vormontiertem Rotorwellen-Lager an dem ansonsten bestückten Motorgehäuse;
- FIG 4: die axiale kommutatorseitige Stirnansicht des kommutatorseitigen Lagerschildes mit darin vormontiertem, durch Ausstemmungen aus dem Lagerschild axial spielfrei fixierten Rotorwellenlager;
- FIG 5: das Lagerschild gemäß FIG 4 im Schnittverlauf V-V.

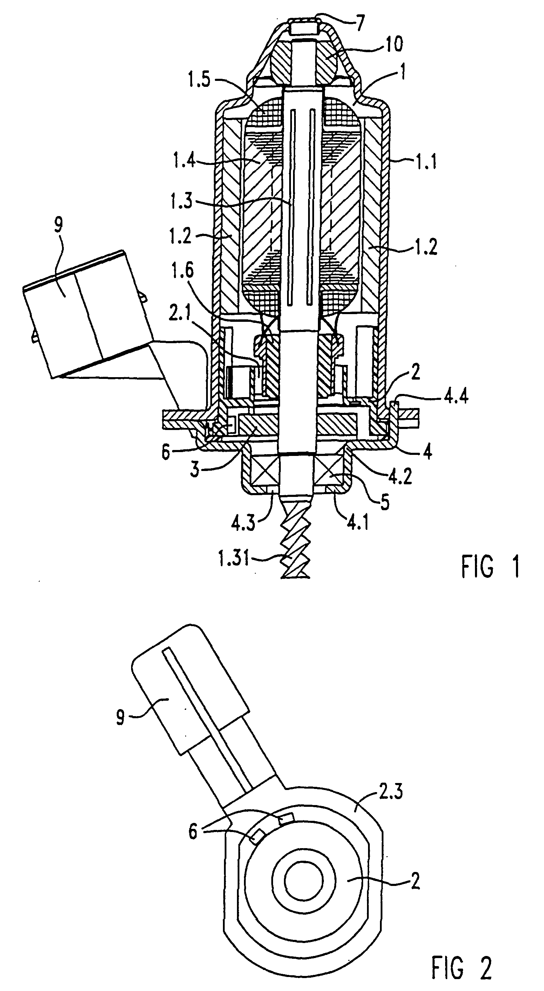

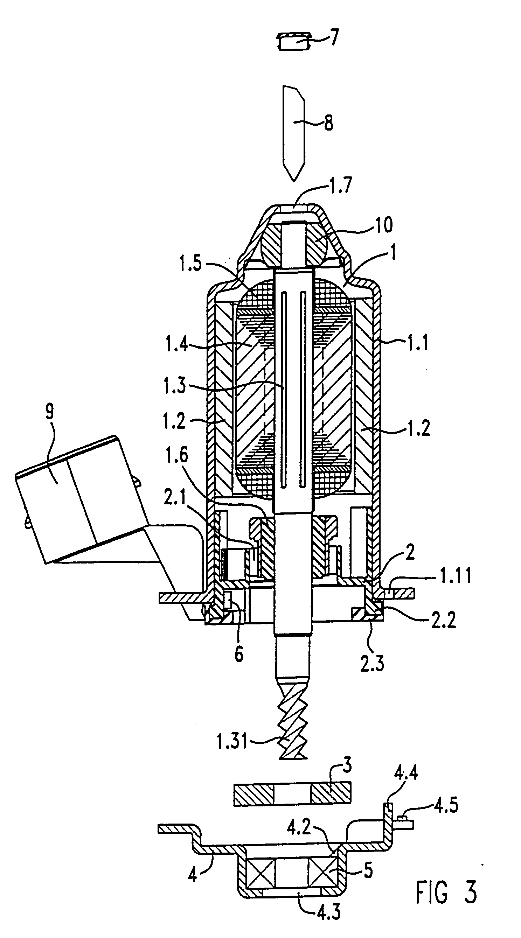

FIG 3 zeigt in einer Explosionsdarstellung anhand eines Kommutator-Stellmotors für einen elektrischen Kupplungs-Stellantrieb eine Vormontagestellung von einer oberen ersten Bauteileinheit, von einer unteren zweiten Bauteileinheit mit in einem Lagerschild spielfrei fixiertem Wälzlager sowie von einem Zwischenbauteil in Form eines hochpolig magnetisierten Polrades; sämtliche Bauteileinheiten bzw. Bauteile sind zu einem Stellmotor gemäß FIG 1 zusammenzubauen.

Die erste obere Bauteileinheit enthält als wesentliche Einzelbauteile ein topfförmiges Motorgehäuse 1.1 mit darin statorseitig fest angeordneten Erregermagneten 1.2 und einer in das Motorgehäuse 1.1 eingesteckten, an ihrem oberen Ende in einem Kalotten-Loslager 10 im Motorgehäuse 1.1 drehbar gelagerten Rotorwelle 1.3 mit darauf gehaltenem Rotorblechpaket 1.4, in das eine an einen Kommutator 1.6 angeschlossene Rotorwicklung 1.5 eingebracht ist, sowie mit einer axial vom offenen Ende des Motorgehäuses 1.1 her einschiebbaren Bürstenhalterung 2. Die Rotorwicklung 1.5 wird über den Kommutator 1.6 beschleifende, in der Bürstenhalterung 2 geführte Bürsten 2.1 von einer äußeren Speiseleitung gespeist. Ein dem Drehimpuls-Geber in Form des hochpolig magnetisierten Polrades 3 zugeordneter Drehimpuls-Empfänger 6 in Form einer Schaltungsanordnung mit hier zwei - insbesondere aus FIG 2 ersichtlichen - Hall-IC's ist in vorteilhafter Weise ohne gesonderte Einzelhalterung auf der Bürstenhalterung 2 in Nähe zu dem Polrad 3 mituntergebracht. Steuer- und/bzw. Speiseleitungen führen zu einem, vorzugsweise einstückig mit der Bürstenhalterung gespritzten, äußeren Anschluß-Steckverbindung 9.

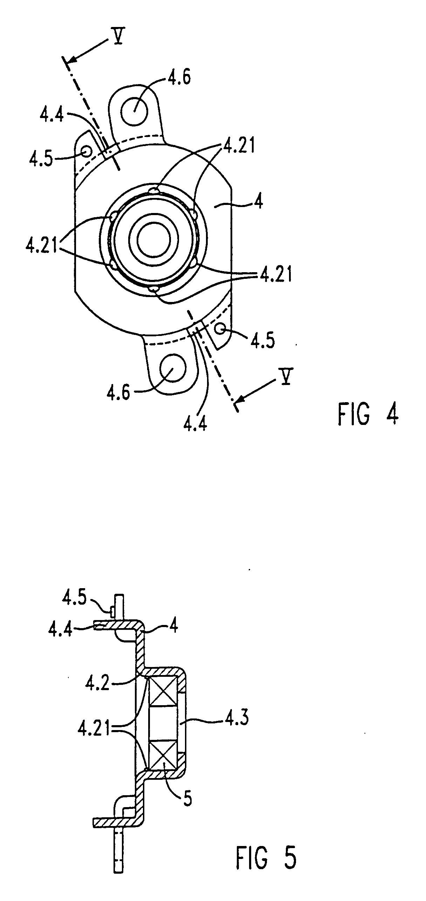

Für eine hochauflösende Dreherkennung ist als Drehimpuls-Geber ein hochpoliges Polrad 3 vorgesehen, dessen Durchmesser größer als der Durchmesser des Kommutators 1.6 ist und das vor der Montage des das topfförmige Motorgehäuse 1.1 kommutatorseitig abschließenden Lagerschildes 4 auf die ansonsten vormontierte obere erste Bauteileinheit gemäß FIG 5 befestigbar ist. Zum Aufdrücken des Polrades 3 auf das kommutatorseitige Wellenende der Rotorwelle 1.3 ist in fertigungs- und montagetechnisch vorteilhafter Weise das topfförmige Motorgehäuse 1.1 an seinem dem Kommutator 1.6 abgewandten Ende mit einer Öffnung 1.7 versehen, durch die ein Abstützwerkzeug 8 bis zur Anlage gegen das Wellenende der Rotorwelle 1.3 andrückbar ist und dessen Öffnung 1.7 nach dem Rückziehen des Abstützwerkzeuges 8 durch eine Dichtungskappe 7 wieder verschließbar ist.

In vorteilhafter Weise ist eine zweite vormontierbare Bauteileinheit aus dem kommutatorseitigen Lagerschild 4 und dem darin zu befestigenden Rotorwellen-Lager 5, insbesondere in Form eines Kugellagers, derart vorgesehen, daß das Rotorwellen-Lager 5 in seiner einen axialen Richtung am Topfboden 4.1 einer topfförmigen Vertiefung des Lagerschildes 4 axial anliegt und in seiner axialen Gegenrichtung im Sinne eines axial kurzbauenden Festlagers durch aus dem Topfrand 4.2 der topfförmigen Vertiefung ausdrückbare, über den Umfang des Außenrandes des Rotorwellen-Lagers 5 verteilte, vorteilhaft aus dem Vollmaterial des Lagerschildes 4 ausgeprägte, Verstemmungen 4.21 positionssicherbar ist; durch die Verstemmung des Rotorwellen-Lagers 5 ist einerseits eine fertigungstechnisch einfache und andererseits insbesondere auch hinsichtlich stärkerer axialer Druckbelastungen stabile Lagefixierung gewährleistet. Die derartig geschaffene Bauteileinheit wird dann an der oberen Bauteileinheit des Motorgehäuses 1.1 befestigt, wobei beim Aufdrücken des Rotorwellen-Lagers 5 auf die Rotorwelle 1.3 vorteilhaft in axialer Gegenrichtung auch hier das Abstützwerkzeug 8 einsetzbar ist. Der gesamte Bestükkungs- bzw. Montagevorgang kann vorteilhaft in nur einer, insbesondere für eine Automatenfertigung geeigneten, hier axialen, Handhabungsrichtung erfolgen.

Damit trotz einfacher Fertigung und Montage eine möglichst genaue Ausrichtung mit minimalem Luftspalt zwischen dem hochpolig magnetisierten Polrad 3 auf der Rotorwelle 1.3 einerseits und dem Hall-IC-Empfänger 6 auf der Bürstenhalterung 2 andererseits gewährleistet ist, sind an das Motorgehäuse 1.1 sowie an den kommutatorseitigen Lagerschild 4 im Bereich ihrer gegenseitigen Montage-Anlage, insbesondere an einem radial überstehenden Flanschteil, Ausrichtmittel vorgesehen, z.B. in Form von an den Lagerschild 4 angeformten axialen Führungs-Stiften 4.5, denen am Motorgehäuse 1.1 angepaßte axiale Führungs-Öffnungen entsprechen, bzw. Befestigungsmittel 4.4 vorgesehen, in Form von an dem Lagerschild 4 angeformten axialen Verstemmnasen, die durch korrespondierende Befestigungsöffnungen als Befestigungsmittel 1.11 am Motorgehäuse 1.1 steckbar und dann im Sinne einer gegenseitigen Fixierung verstemmbar, sind. In vorteilhafter Weise sind die Flanschteile, welche die gegenseitigen Ausrichtmittel 4.5 und Befestigungsmittel 4.4;1.11 aufnehmen, auch zur Halterung des Elektromotors 1 in einer umgebenden Aufnahme, z.B. einer Kraftfahrzeug-Kupplungsvorrichtung, vorgesehen und weisen dazu z.B. kundenspezifische Halterungsöffnungen 4.6 auf.

Zur gegenseitigen Abdichtung zwischen Motorgehäuse 1.1 und kommutatorseitigem Lagerschild 4 reicht nach einer Ausgestaltung der Erfindung die Bürstenhalterung 2 mit einem umfangsseitigen Randteil 2.2, auf den eine Dichtung 2.3 aufgetragen, insbesondere aufgespritzt, ist, zwischen die stirnseitigen gegenseitigen Anlageflächen von Motorgehäuse 1.1 und Lagerschild 4.

Ein durch eine Mittelöffnung 4.3 des Lagerschildes 4 herausführbares und gegenüber dem umgebenden Lagerschild 4 und/oder in der Durchführung durch die Bürstenhalterung 2 gegenüber dieser abdichtbares Abtriebswellenende 1.31 der Rotorwelle 1.3 ist mit einen Abtriebsstirnrad, insbesondere mit einer axial belastenden Verzahnung, zum Antrieb einer elektrischen Kupplungsstelleinrichtung in einem Kraftfahrzeug versehen. Bei vorteilhafter Anwendung des erfindungsgemäßen Kommutator-Stellmotors für einen ABS-Antrieb ist das herausragende Wellenende der Rotorwelle 1.3 zweckmäßigerweise mit einem Exzenter zum Antrieb von Pumpenstößeln einer Brems-Hydraulikpumpe versehen.

## Patentansprüche

1. Elektromotor, insbesondere mit integrierter Dreherkennung,
- mit zumindest einem mit einer Stirnseite eines Motorgehäuses (1.1) zu verbindenden Lagerschild (4) mit einer Lageraufnahme (4.1;4.2) für ein Rotorwellen-Lager (5), insbesondere ein Wälzlager;
- mit auf der Rotorwelle (1.3) axial motorinnen vor dem Rotorwellen-Lager (5) gehaltenem Drehimpuls-Geber in Form eines Polrades (3);
- mit an das Motorgehäuse (1.1) sowie an den Lagerschild (5) im Bereich ihrer gegenseitigen Montage-Anlage, insbesondere an einem radial überstehenden Flanschteil, einstückig angeformten Ausrichtmitteln (4.5) und Befestigungsmitteln (4.4;1.11);
- mit Befestigungsmitteln in Form von axialen, durch korrespondierende Befestigungsöffnungen (1.11) steckbaren und dann verformbaren axialen Verstemmnasen;
- mit einem tangentialen und radialen Versatz der Ausrichtmittel (4.5) gegenüber den Befestigungsmitteln (4.4;1.11).

2. Elektromotor nach Anspruch 1
- mit zumindest jeweils zwei am Umfang verteilten, Ausrichtmitteln (4.5) und Befestigungsmitteln (4.4;1.11).

3. Elektromotor nach Anspruch 1 und/oder 2
- mit einem die Ausrichtmittel (4.5) bzw. Befestigungsmittel (4.1;1.11) aufnehmenden Flanschteil, das gleichzeitig im Sinne einer äußeren Elektromotorhalterung, insbesondere mittels kundenspezifischer Halterungsöffnungen (4.6), ausgebildet ist.

4. Elektromotor nach zumindest einem der vorhergehenden Ansprüche 1-3
- mit einer von dem Motorgehäuse (1.1) aufgenommenen Bürstenhalterung (2) und einem von den Bürsten (2.1) der Bürstenhalterung (2) kontaktierten Kommutator (1.6);
- mit einem Rotorwellen-Lager (5), insbesondere Kugellager, in dem mit dem Motorgehäuse (1.1) verbundenen kommutatorseitigen Lagerschild (4);
- mit einer Dreherkennung enthaltend den magnetischen Drehimpuls-Geber in Form eines axial zwischen dem Kommutator (1.6) und dem Rotorwellen-Lager (5) auf der Rotorwelle (1.3) angeordneten Polrades (3) mit hoher Polzahl einerseits und enthaltend einen zugeordneten magnetischen Drehimpuls-Empfänger, insbesondere Hall-IC-Empfänger (6), auf der Bürstenhalterung (2) andererseits.

5. Elektromotor nach zumindest Anspruch 4
- mit dem Polrad mit einem im Vergleich zu dem Kommutator (1.6) größeren Durchmesser.

6. Elektromotor nach zumindest einem der vorhergehenden Ansprüche 4 und/oder 5
- mit einem topfförmigen Motorgehäuse (1.1) mit an seinem kommutatorseitigen, stirnseitig offenen Ende angeordneter Bürstenhalterung (2) mit Drehimpuls-Empfänger (6);
- mit an seinem kommutatorseitigen Ende stirnseitig mit einem das Rotorwellen-Lager (5) aufnehmenden Lagerschild (4).

7. Elektromotor nach zumindest einem der Ansprüche 1-6
- mit axial außen gegen einen Anschlag des Lagerschildes (4), insbesondere einen Topf-Boden (4.1) einer topfförmigen Vertiefung, anliegenden Rotorwellen-Lager (5);
- mit axial innen durch Verstemmungen (4.21) mit dem Lagerschild (4), insbesondere durch Verstemmungen aus dem Topf-Rand (4.2) der topfförmigen Vertiefung, im Sinne eines Festlagers positionsfixierten Rotorwellen-Lager (5), insbesondere Kugellager.

8. Elektromotor nach Anspruch 7
- mit nur in axialer Richtung ineinander zusammengefügten und gegenseitig im Sinne eines Festsitzes fixierbten Bauteilen der Lageraufnahme (4.1;4.2;4.21) und des Rotorwellen-lagers (5).

9. Elektromotor nach zumindest einem der vorhergehenden Ansprüche 1-8
- mit einer Bürstenhalterung (2) mit einem umfangsseitig zwischen die voreinanderliegenden Stirnseiten von Motorgehäuse (1.1) einerseits und Lagerschild (4) andererseits reichenden Randteil (2.2) mit einer, insbesondere aufgespritzten, Dichtungsauflage (2.3).

10. Elektromotor nach zumindest einem der vorhergehenden Ansprüche 4-6
- mit einem durch eine Mittelöffnung (4.3) des kommutatorseitigen Lagerschildes (4) ragenden Antriebswellenende (1.31) der Rotorwelle (1.3).

## Claims

1. Electric motor, in particular having integrated rotation identification,
- having at least one bearing plate (4) which can be connected to an end face of a motor housing (1.1) and has a bearing holder (4.1; 4.2) for a rotor shaft bearing (5), in particular a roller bearing;
- having a rotation pulse transmitter, which is held axially inside the motor, in front of the rotor shaft bearing (5), on the rotor shaft (1.3) and is in the form of a pole wheel (3);
- having alignment means (4.5), which are integrally formed on the motor housing (1.1) and on the bearing plate (5) in the region of their mutual mounting installation, in particular on a radially projecting flanged part, and having attachment means (4.4; 1.11);
- having attachment means in the form of axial peening tabs, which can be passed through corresponding attachment openings (1.11) and then be deformed; and
- having a tangential and radial offset between the alignment means (4.5) and the attachment means (4.4; 1.11).

2. Electric motor according to Claim 1,
- having in each case at least two alignment means (4.5), which are distributed on the circumference, and attachment means (4.4; 1.11).

3. Electric motor according to Claim 1 and/or 2,
- having a flanged part which holds the alignment means (4.5) and the attachment means (4.1; 1.11) and is at the same time designed in the form of an outer electric motor holder, in particular by means of customer-specific holding openings (4.6).

4. Electric motor according to at least one of the preceding Claims 1 - 3,
- having a brush holder (2) which is held by the motor housing (1.1) and having a commutator (1.6) with which the brushes (2.1) in the brush holder (2) make contact;
- having a rotor shaft bearing (5), in particular a ball bearing, in the commutator-end bearing plate (4) which is connected to the motor housing (1.1);
- having rotation identification, firstly containing the magnetic rotation pulse transmitter in the form of a pole wheel (3), which is arranged axially on the rotor shaft (1.3) between the commutator (1.6) and the rotor shaft bearing (5) and has a large number of poles, and secondly containing an associated magnetic rotation pulse receiver, in particular a Hall IC receiver (6), on the brush holder (2).

5. Electric motor according to at least Claim 4,
- having the pole wheel with a diameter which is larger than that of the commutator (1.6).

6. Electric motor according to at least one of the preceding Claims 4 and/or 5,
- having a motor housing (1.1) which is in the form of a pot and has a brush holder (2) which is arranged at its commutator end (that is open on the end face) and has a rotation pulse receiver (6);
- having on the end face on its commutator end [lacuna] with a bearing plate (4) which holds the rotor shaft bearing (5).

7. Electric motor according to at least one of Claims 1 - 6,
- having a rotor shaft bearing (5) which rests axially externally against a stop on the bearing plate (4), in particular a pot base (4.1) of a depression in the form of a pot; and
- having a rotor shaft bearing (5), in particular a ball bearing, whose position is fixed axially internally by peened regions (4.21) with the bearing plate (4), in particular by peened regions from the pot edge (4.2) of the depression which is in the form of a pot, in the sense of a fixed bearing.

8. Electric motor according to Claim 7,
- having components which are joined to one another only in the axial direction and are fixed with respect to one another in the sense of a firm seat, for the bearing holder (4.1; 4.2; 4.21) and for the rotor shaft bearing (5).

9. Electric motor according to at least one of the preceding Claims 1 - 8,
- having a brush holder (2) having an edge part (2.2) which extends on the circumferential side between the end faces of the motor housing (1.1) which are located one in front of the other on the one side and the bearing plate (4) on the other side and has a sealing layer (2.3) which is, in particular, sprayed on.

10. Electric motor according to at least one of the preceding Claims 4 - 6,
- having a drive shaft end (1.31) of the rotor shaft (1.3), which projects through a centre opening (4.3) in the commutator-end bearing plate (4).

## Revendications

1. Moteur électrique, en particulier avec détection intégrée de rotation,
- comportant au moins un flasque (4) à assembler à un côté frontal d'une carcasse (1.1) de moteur et dotée d'un logement (4.1 ; 4.2) de palier pour un palier (5) d'arbre de rotor, notamment un palier à roulement ;
- comportant un générateur d'impulsions de rotation sous la forme d'une roue (3) polaire, maintenue sur l'arbre (1.3) de rotor à l'intérieur du moteur, axialement avant le palier (5) d'arbre de rotor ;
- comportant des moyens (4.4; 1.11) de fixation et des moyens (4.5) d'alignement formés d'un seul tenant, sur le carcasse (1.1) de moteur ainsi que sur le flasque (4) dans la région de leur application mutuelle de montage, notamment sur une partie de bride radialement en saillie ;
- comportant des moyens de fixation sous la forme de becs matés axiaux, pouvant être enfilés dans des ouvertures (1.11) correspondantes de fixation puis déformés ;
- comportant un décalage tangentiel et radial des moyens (4.5) d'alignement par rapport aux moyens (4.4 ; 1.11) de fixation.

2. Moteur électrique suivant la revendication 1, comportant aux moins deux moyens (4.5) d'alignement et deux moyens (4.4; 1.11) de fixation, répartis sur la circonférence.

3. Moteur électrique suivant la revendication 1 ou 2, comportant une partie de bride recevant les moyens (4.5) d'alignement ou respectivement les moyens (4.4 ; 1.11) de fixation, qui est en même temps conçue comme support extérieur du moteur électrique, notamment au moyen d'ouvertures (4.6) de support spécifiques du client.

4. Moteur électrique suivant l'une des revendications 1 à 3,
- comportant un support (2) de balais reçu par la carcasse (1.1) de moteur et un collecteur (1.6) avec lequel les balais (2.1) du support (2) de balais entrent en contact ;
- comportant un palier (5) d'arbre de rotor, notamment un roulement à billes, dans le flasque (4) côté collecteur, assemblé à la carcasse (1.1) de moteur ;
- comportant une détection de rotation comprenant d'une part le générateur magnétique d'impulsions de rotation sous la forme d'une roue (3) polaire dotée d'un grand nombre de pôles et disposée axialement entre le collecteur (1.6) et le palier (5) d'arbre de rotor sur l'arbre (1.3) de rotor, et comprenant d'autre part un récepteur magnétique associé d'impulsions de rotation, notamment un récepteur (6) sous forme de circuit intégré à effet Hall, sur le support (2) de balais.

5. Moteur électrique suivant la revendication 4, dont la roue polaire possède un diamètre supérieur à celui du collecteur (1.6).

6. Moteur électrique suivant la revendication 4 ou 5,
- comportant une carcasse (1.1) de moteur en forme de pot ayant un support (2) de balais et pourvue du récepteur (6) d'impulsions de rotation, qui est disposée à son extrémité côté collecteur, ouverte du côté frontal ;
- comportant à son extrémité côté collecteur, du côté frontal, un flasque (4) recevant le palier (5) d'arbre de rotor.

7. Moteur électrique suivant l'une des revendications 1 à 6,
- comportant un palier (5) d'arbre de rotor appliqué axialement à l'extérieur contre une butée du flasque (4), notamment contre un fond (4.1) de pot d'un renfoncement en forme de pot ;
- comportant un palier (5) d'arbre de rotor, notamment un roulement à billes, immobilisé, à la manière d'un palier fixe, axialement à l'intérieur par des matages (4.21) sur le flasque (4), notamment par des matages provenant du bord (4.2) de pot du renfoncement en forme de pot.

8. Moteur électrique suivant la revendication 7, comportant des éléments du logement (4.1 ; 4.2 ; 4.21) de palier et du palier (5) d'arbre de rotor assemblés les uns dans les autres uniquement en direction axiale et immobilisés les uns par rapport aux autres à la manière d'un ajustement serré.

9. Moteur électrique suivant l'une des revendications 1 à 8, comportant un support (2) de balais doté d'une partie (2.2) de bord s'étendant circonférentiellement entre les côtés frontaux en vis-à-vis de la carcasse (1.1) de moteur d'une part et du flasque (4) d'autre part et pourvue d'un revêtement (2.3) d'étanchéité, notamment appliqué au pistolet.

10. Moteur électrique suivant l'une des revendications 4 à 6, comportant une extrémité (1.31) d'arbre d'entraînement de l'arbre (1.3) de rotor qui dépasse par une ouverture (4.3) centrale du flasque (4) côté collecteur.
